Europäisches Patentamt

European Patent Office

Office européen des brevets

(19)

(11) Veröffentlichungsnummer: **0 059 233**

A1

(12) ## EUROPÄISCHE PATENTANMELDUNG

(21) Anmeldenummer: **81104643.2**

(22) Anmeldetag: **16.06.81**

(51) Int. Cl.³: **F 16 J 9/06**

(30) Priorität: **27.02.81 IT 2004981**

(43) Veröffentlichungstag der Anmeldung:
**08.09.82 Patentblatt 82/36**

(84) Benannte Vertragsstaaten:
**AT BE CH DE FR GB IT LI LU NL SE**

(71) Anmelder: **Gianini, Bruno**
**Via Riviera N. 61**
**I-27100 Pavia(IT)**

(72) Erfinder: **Gianini, Bruno**
**Via Riviera N. 61**
**I-27100 Pavia(IT)**

(74) Vertreter: **Selting, Günther, Dipl.-Ing. et al,**
**Deichmannhaus am Hauptbahnhof**
**D-5000 Köln 1(DE)**

(54) Kolben mit Kolbenring.

(57) Der Kolbenring (1) besteht aus einem offenen, geteilten Ringkörper der in einer Ringnut (2) des Kolbens (3) eingesetzt ist. Die Enden des Kolbenringes (1) sind mit Abschrägungen (4) versehen, so daß die Teilungsfuge sich keilförmig nach innen öffnet. Gegen die Abschrägungen (4) liegen Schrägflächen (5) eines Formkörpers (6) an, der in einer radialen Kammer (7) im Grund der Ringnut (2) verschiebbar gelagert ist. Der Formkörper (6) steht unter der Wirkung eines federelastischen Schubmittels (10), das seine pfeilförmige Spitze (9) in die keilförmige Teilungsfuge hinein und gegen die Abschrägungen (4) drückt.

Fig.3

EP 0 059 233 A1

VON KREISLER    SCHÖNWALD    EISHOLD    F0059233

VON KREISLER    KELLER    SELTING    WERNER

PATENTANWÄLTE

Dr.-Ing. von Kreisler † 1973

Dr.-Ing. K. Schönwald, Köln
Dr.-Ing. K. W. Eishold, Bad Soden
Dr. J. F. Fues, Köln
Dipl.-Chem. Alek von Kreisler, Köln
Dipl.-Chem. Carola Keller, Köln
Dipl.-Ing. G. Selting, Köln
Dr. H.-K. Werner, Köln
Sg-DB/my
15. Juni 1981

DEICHMANNHAUS AM HAUPTBAHNHOF

D-5000 KÖLN 1

GIANINI, Bruno
Via Riviera N. 61
27100 P a v i a , Italien

## Kolben mit Kolbenring

Die Erfindung bezieht sich auf einen Kolben mit Kolbenring, insbesondere für Verbrennungsmotoren, mit einem geteilten offenen Ringkörper, der in eine Ringnut auf dem Umfang des Kolbens eingesetzt ist.

Es ist bei Verbrennungsmotoren bekannt, daß der Kolbenring vor allem die Aufgabe erfüllen muß, eine Dichtung gegenüber den unter Druck stehenden Gasen im Inneren des Zylinders zu bilden, um zu verhindern, daß die Gase selbst in Richtung des Gehäuses entweichen. Außerdem soll der Kolbenring verhindern, daß Öldämpfe aus dem Gehäuse und das Öl selbst, das auf die Zylinderbüchse spritzt,in den Brennraum gelangen.

Ein weiterer Zweck des Kolbenringes besteht darin, auf die Zylinderbüchse den größten Teil der Wärme zu übertragen, die der Zyklus des Kolbens von den Verbrennungsgasen erhält, um auf diese Weise dazu beizutragen, daß

Telefon: (02 21) 13 10 41 · Telex: 888 2307 dopo d · Telegramm: Dompatent Köln

der Mantel kalt bleibt, der als Gleitkörper der kinematischen Bewegung dient.

Bisher werden die Kolbenringe aus einem Metallteil in Form eines geteilten offenen Ringes hergestellt, der zwischen Kolben und Zylinderbüchse eines Verbrennungsmotors eingefügt wird. Der Kolbenring sitzt in Ringnuten des Kolbens und sein freier Außendurchmesser ist größer als der Innendurchmesser des Zylinders, in dem der Kolben gleitet, so daß er bei den Hubbewegungen des Kolbens durch seine Elastizität einen radialen Druck auf die Zylinderwand ausübt, wobei der Druck während des Betriebes des Motors mit verschiedenen Drehzahlen möglichst gleichmäßig sein und konstant bleiben soll.

Der offene Kolbenring wird so hergestellt, daß nach seiner Montage in bezug auf die Spaltzone ein gewisses Spiel verbleibt, das Ausdehnungen aufgrund thermischer Einflüsse während des Betriebes erlaubt.

Die Größe des Spiels ist von besonderer Bedeutung, weil bei zu großem Spiel ein Verlust an Motorkompression mit anderen Nachteilen eintritt, die im folgenden klarer werden, während ein zu geringes Spiel durch die thermische Ausdehnung des Kolbenringes zum Fressen der Kolben führen kann.

Nach einer bestimmten Betriebszeit wird das Spiel durch den Verschleiß des Kolbenringes größer, wobei die reduzierte lichte Breite der Fuge zwischen den Enden des Kolbenringes zunimmt, wodurch sich ein Verlust an Motorkompression und gesteigerter Ölverbrauch ergeben, weil Anteile der Öldämpfe in den Brennraum entweichen können. Die Verbrennungsgase gelangen in das Öl und verunreinigen es; außerdem steigt der Ölverbrauch, weil Öl in dem Brennraum verbrennt, wobei sich Ablagerungen bilden, die den guten Betrieb des Motors beeinträchtigen.

Aufgabe der Erfindung ist es, die erwähnten Nachteile zu vermeiden und einen Kolben mit Kolbenring für einen Verbrennungsmotor zu schaffen, mit dem es gelingt, die Lebensdauer des Motors unter Beibehaltung seiner ursprünglichen Charakteristika beträchtlich zu verlängern.

Diese Aufgabe wird dadurch gelöst, daß an den Enden des Kolbenringes an der offenen Teilungsfuge Abschrägungen ausgebildet sind, die eine sich nach innen erweiternde Kerbe begrenzen, daß gegen die Abschrägungen Schrägflächen eines Formkörpers anliegen, der in einer radialen Kammer verschiebbar gelagert ist, die sich in dem Grund der Ringnut befindet, und daß federelastische Schubmittel auf den Formkörper wirken, um ihn gegen die Abschrägungen angedrückt zu halten.

Eine solche Ausbildung eines Kolbens mit Kolbenring bewirkt in der Praxis eine selbsttätige Anpassung des Kolbenringes an seine Verschleißabnutzung, was zur Folge hat, daß auch nach einer langen Betriebszeit der Kolbenring seine ursprüngliche Abdichtwirkung noch hat. Den Ölverbrauch steigernde Verunreinigungen infolge innerer Verluste des Motors und des Gasaustrittes aus dem Brennraum werden zuverlässig verhindert, weil das Entstehen von Durchtrittsöffnungen an den gegenüberliegenden Enden der Fuge des Kolbenringes unterbunden wird, während thermische Ausdehnungen des Kolbenringes möglich sind.

Die Schrägflächen des Formkörpers bewirken unter dem Einfluß des federelastischen Schubmittels in Verbindung mit den Abschrägungen an den Enden des Kolbenringes eine dauernde Überbrückung von Zwischenräumen, die sich durch Abnutzung des Kolbenringes und des Zylinders bilden, und auf diese Weise behält der Motor seine Originalverdichtungswerte.

Der Kolben mit Kolbenring ist durch die besonderen Konstruktionsmerkmale in der Lage, Zuverlässigkeit und Sicherheit im Gebrauch zu garantieren. Der Kolbenring läßt sich auf einem vorhandenen üblichen Kolben montieren, wobei nur unwesentliche Änderungen für seine Montage nötig sind.

Der Kolbenring kann aus im Handel erhältlichen Teilen hergestellt werden, so daß er preiswert ist.

Weitere Merkmale ergeben sich aus der ausführlichen Beschreibung von Ausführungsbeispielen elastischer Kolbenringe für Verbrennungsmotoren. Es zeigt:

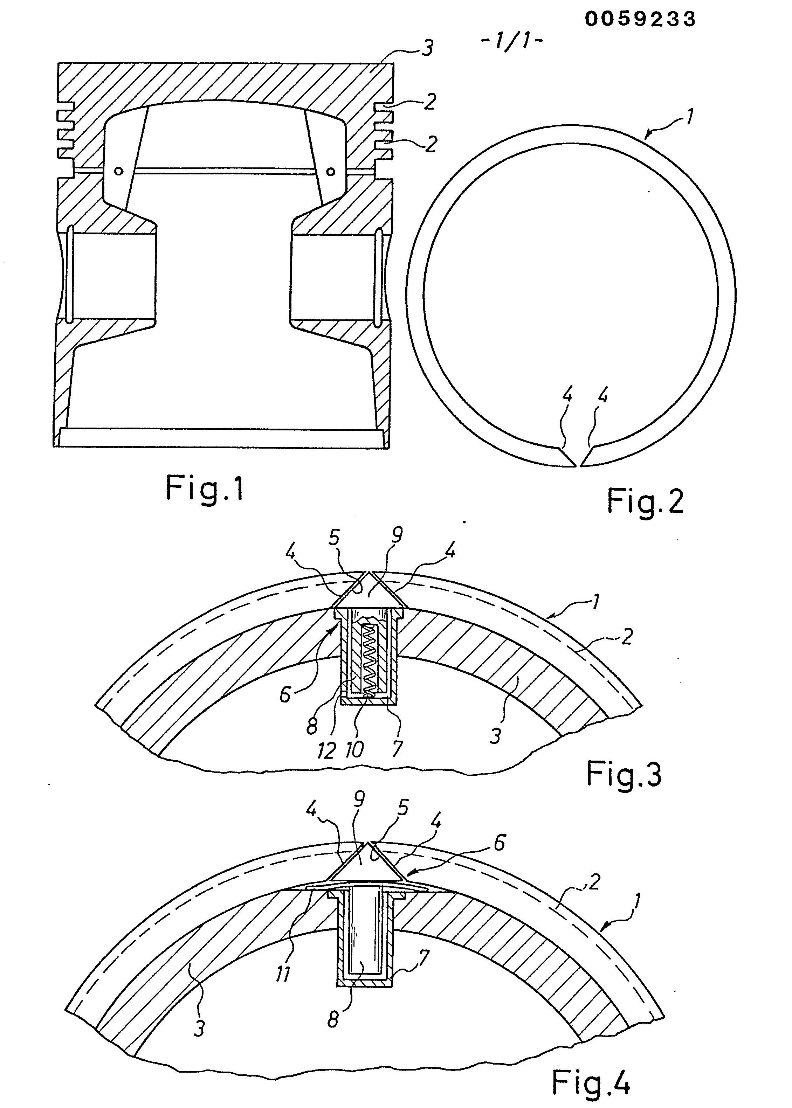

Figur 1 einen Längsschnitt eines herkömmlichen Kolbens

Figur 2 eine Draufsicht des federnden Kolbenringes

Figur 3 eine mögliche Art der Montage des Kolbenringes auf dem Kolben, in Querschnittsdarstellung, und

Figur 4 eine andere Anwendungsform des erfindungsgemäßen Kolbenringes.

Der Kolbenring 1, insbesondere für Verbrennungsmotoren, besteht aus einem geteilten offenen Ringkörper, der in eine Ringnut 2 auf einem Kolben 3 eingesetzt ist.

Die Anzahl der Ringnuten 2 hängt von den Erfordernissen und der Art des Motors ab, für den der Kolben bestimmt ist.

Das besondere Merkmal der Erfindung besteht darin, daß der offene Ringkörper 1 an seiner offenen Fuge Abschrägungen 4 aufweist, die sich gegen das Innere des Kolbenringes öffnen und die in bezug auf die radiale Richtung einen Winkel vorzugsweise zwischen 30° und 60° bilden können. Gegen die Abschrägungen 4 liegen Schrägflächen 5 eines Formkörpers 6 an, der in einer radialen Kammer 7 verschiebbar gelagert ist, die in dem Grund der Ringnut ausgebildet ist.

Der Formkörper 6 hat einen Schaft 8 mit kreisrundem oder polygonalem Querschnitt, der im Inneren der Kammer 7 verschiebbar gelagert ist und der an seinem freien Ende ein pfeilförmiges Profilstück 9 besitzt, das die geneigten Schrägflächen 5 aufweist.

Das pfeilförmige Profilstück 9 stößt federnd elastisch von innen gegen die Abschrägungen 4 des Kolbenringes 1. Die federnde Schubkraft wird durch Federmittel, z.B. eine Schraubenfeder 10 zwischen dem Schaft 8 und dem Boden der Kammer 7 oder eine Blattfeder 11, erzeugt, die zwischen dem Umfangsrand der Kammer 7 und der Angriffszone des Profilstückes 9 wirkt. Die Schraubenfeder 10 steckt in einer Sackbohrung des Schaftes 8.

Die Gestaltung der Federmittel ergibt sich dadurch, daß ihre einzige Funktion darin besteht, das Profilstück 9 elastisch so gegen die Abschrägungen 4 zu drücken, daß praktisch die Öffnung verschlossen wird, die sonst an dem gegenüberliegenden Ende des offenen Ringkörpers 1 verbleiben würde.

Die Abschrägungen 4 und die Schrägflächen 5 sind so gestaltet, daß eventuelle thermische Ausdehnungen des Kolbenringes 1 möglich bleiben, weil bei Annäherung oder Entfernung der Enden des Ringkörpers 1 die Neigungen der Schrägflächen 5 eine radiale Druckkomponente auf den Formkörper 6 ausüben, die sich in der Praxis automatisch an sich ändernde Verhältnisse anpaßt, wodurch immer eine perfekte Dichtung aufrechterhalten wird.

Da der Formkörper 6, insbesondere sein pfeilförmiger Kopf 9, so gestaltet ist, daß sein Scheitelteil die Wand des Zylinders berührt, unterliegt dieser demselben Verschleiß wie der Kolbenring 1, und es ergibt sich eine perfekte Anpassung an die jeweiligen Gestaltungen der unterbrochenen Zone des offenen Ringes, der den Kolbenring 1 bildet.

Der Formkörper 6 bewirkt, daß auch nach langer Benutzungszeit und einem gewissen Verschleiß keine Öffnung an den Enden des Ringes auftritt. Wie schon erwähnt, ist dies besonders wichtig, weil eine perfekte Dichtung gegenüber den Gasen aus dem Brennraum die Verunreinigung des Öles verhindert und damit gleichzeitig übermäßigen Ölverbrauch unterbindet, weil das Öl selbst nicht in den Brennraum gelangen und schädliche Ablagerungen verursachen kann.

Aus Vorstehendem ist ersichtlich, daß die Erfindung die ihr zugrundeliegende Aufgabe löst und einen Verbrennungsmotor schafft, der sich dadurch auszeichnet, daß Verunreinigungen infolge von internen Verlusten des Motors und des Gasaustrittes verhindert werden. Auf diese Weise wird die Lebensdauer des Motors mit seinen ursprünglichen Charakteristika verlängert.

Die genaue und kontinuierliche Verbindung zwischen den Abschrägungen 4 und den Schrägflächen 5 erzielt man dadurch, daß die Abschrägungen 4 und die Schrägflächen 5 dieselbe Winkelneigung in bezug auf die Radialrichtung des Kolbens aufweisen.

Die Erfindung kann zahlreiche Veränderungen und Varianten erfahren, die alle in den Bereich des Grundgedankens fallen. Außerdem können alle Einzelheiten durch andere technisch gleichwertige Teile ersetzt werden.

PATENTANSPRÜCHE

1. Kolben mit Kolbenring (1), insbesondere für
Verbrennungsmotoren, mit einem geteilten offenen Ringkörper (1), der in eine Ringnut (2) auf dem Umfang des
Kolbens (3) eingesetzt ist,
d a d u r c h   g e k e n n z e i c h n e t,   daß
an den Enden des Kolbenringes (1) an der offenen Teilungsfuge Abschrägungen (4) ausgebildet sind, die eine sich
nach innen erweiternde Kerbe begrenzen, daß gegen die
Abschrägungen (4) Schrägflächen (5) eines Formkörpers
(6) anliegen, der in einer radialen Kammer (7) verschiebbar gelagert ist, die sich in dem Grund der Ringnut (2)
befindet, und daß federelastische Schubmittel (10;11)
auf den Formkörper (6) wirken, um ihn gegen die Abschrägungen
(4) angedrückt zu halten.

2. Kolben nach Anspruch 1,
d a d u r c h   g e k e n n z e i c h n e t,   daß
die Abschrägungen (4) des Kolbenringes (1) und die Schrägflächen (5) des Formkörpers (6) in bezug auf eine radiale
Richtung des Kolbens (3) dieselbe Winkelneigung aufweisen.

3. Kolben nach Anspruch 1 oder 2,
d a d u r c h   g e k e n n z e i c h n e t,   daß
der Formkörper (6) einen Schaft (8) aufweist, der axial
verschiebbar in der Kammer (7) gelagert ist und an dessen
freiem Ende ein pfeilspitzenförmiges Profilstück (9)
angeordnet ist, das die beiden Schrägflächen (5) bildet.

4. Kolben nach Anspruch 1,
d a d u r c h   g e k e n n z e i c h n e t,   daß das
federelastische Schubmittel aus einer Schraubenfeder
(10) besteht, die zwischen dem Boden der Kammer (7) und
dem Schaft (8) des Formkörpers (6) wirkt.

5. Kolben nach Anspruch 1,
d a d u r c h   g e k e n n z e i c h n e t,   daß
das federelastische Schubmittel aus einer Blattfeder
(11) besteht, die zwischen dem Umfangsrand der Kammer
(7) und der Angriffszone des Formkörpers (6) wirkt.

6. Kolben nach einem der Ansprüche 1 bis 5,
d a d u r c h   g e k e n n z e i c h n e t,   daß
der Scheitel des pfeilförmigen Profilstückes (9) die
Wand des den Kolben (3) aufnehmenden Zylinders berührt,
so daß die Öffnung an der Teilungsfuge des Kolbenringes (3) immer dicht verschlossen ist.

7. Kolben. nach einem der Ansprüche 1 bis 6,
d a d u r c h   g e k e n n z e i·c h n e t,   daß
die Kammer (7) aus einer hutförmigen Buchse besteht,
die in ein Loch im Grund der Ringnut (2) eingesetzt
ist und deren Öffnungsrand mit der Oberfläche des
Grundes der Ringnut (2) im wesentlichen bündig verläuft.

8. Kolben nach Anspruch 7,   d a d u r c h   g e k e n n -
z e i c h n e t,   daß in dem in den Hohlraum des Kolbens
(3) hineinragenden Teil der Wand der Buchse eine Schmieröffnung (12) ausgebildet ist.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - C - 471 119</u> (KREISINGER) <br> * Insgesamt; Figuren 1-3 * | 1,2,5, 6 |
| | -- | |
| X | <u>GB - A - 3935 AD 1909</u> (ALLEN) <br> * Seite 3, Zeile 9 - Seite 4, Zeile 33; Figuren 1-18 * | 1-6 |
| | -- | |
| X | <u>US - A - 1 735 291</u> (MORATTA) <br> * Seite 2, Zeile 113 - Seite 3, Zeile 56; Figuren 7-12 * | 1,2,5, 6 |
| | -- | |
| X | <u>FR - A - 1 093 798</u> (OUDET) <br> * Insgesamt; Figuren 1-3 * | 1,2,5, 6,8 |
| | -- | |
| | <u>GB - A - 199 841</u> (ALLEN) <br> * Seite 1, Zeile 94 - Seite 2, Zeile 11; Figuren 3,4,7 * | 7 |
| | ---- | |

**KLASSIFIKATION DER ANMELDUNG (Int Cl³)**

F 16 J 9/06

**RECHERCHIERTE SACHGEBIETE (Int. Cl³)**

F 16 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-07-1981 | LEGER |

EPA form 1503.1   06.78